(19) Europäisches Patentamt
European Patent Office
Office européen des brevets

(11) **EP 4 435 680 A1**

(12) **EUROPÄISCHE PATENTANMELDUNG**

(43) Veröffentlichungstag:
**25.09.2024  Patentblatt 2024/39**

(21) Anmeldenummer: **23163429.6**

(22) Anmeldetag: **22.03.2023**

(51) Internationale Patentklassifikation (IPC):
**G06N 20/00** (2019.01)  **G06N 3/088** (2023.01)

(52) Gemeinsame Patentklassifikation (CPC):
**G06N 20/00; G06N 3/02; G06N 3/088**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Mobility GmbH**
**81739 München (DE)**

(72) Erfinder: **Braband, Jens**
**38106 Braunschweig (DE)**

(74) Vertreter: **Siemens Patent Attorneys**
**Postfach 22 16 34**
**80506 München (DE)**

(54) **EVALUIEREN EINES DATENSATZES BASIEREND AUF EINEM UNSICHERHEITSBEREICH**

(57)    Es wird ein Computer-implementiertes Verfahren zum Evaluieren eines Datensatzes (100) beschrieben, das Verfahren aufweisend: i) Bereitstellen des Datensatzes (100), welcher mittels eines physikalischen Prozesses erzeugt wurde, und aufweist:
a) eine Vielzahl von ersten Datenpunkten (101), welche einem ersten Label zuordenbar sind, wobei die ersten Datenpunkte (101) zumindest teilweise zumindest einen ersten lokalen Clusterbereich (110) bilden, und
b) eine Vielzahl von zweiten Datenpunkten (102), welche einem zweiten Label zuordenbar sind, wobei die zweiten Datenpunkte (102) zumindest teilweise zumindest einen zweiten lokalen Clusterbereich (120) bilden,
wobei die ersten Datenpunkte (101) und die zweiten Datenpunkte (102) separierbar sind;
ii) Erstellen eines Unsicherheitsbereichs zumindest zwischen dem ersten Clusterbereich (110) der ersten Datenpunkte (101) und dem zweiten Clusterbereich (120) der zweiten Datenpunkte (102); und
iii) Evaluieren des Datensatzes (100) basierend auf dem erstellten Unsicherheitsbereich.

FIG 5

EP 4 435 680 A1

**Beschreibung**

Technisches Gebiet

Die Erfindung bezieht sich auf ein Computer-implementiertes Verfahren zum Evaluieren eines Datensatzes, welcher einen physikalischen Prozesses, insbesondere im Bereich der Schienenverkehrstechnik, betrifft. Ferner bezieht sich die Erfindung auf eine Vorrichtung zur Datenverarbeitung und ein Computerprogrammprodukt.

Die Erfindung kann sich somit auf das technische Gebiet der Bewertung von Datensätzen beziehen, insbesondere im Hinblick auf Schienenverkehrstechnik.

Technischer Hintergrund

Eine Vielzahl von technischen Funktionen und physikalischen Prozessen kann mittels Datensätzen beschrieben werden. Zur Auswertung (aber auch zur Erstellung) dieser Datensätze werden immer häufiger künstliche Intelligenz (KI) Algorithmen bzw. Algorithmen des maschinellen Lernens (ML) verwendet (im Folgenden wird ML als eine Form von KI angesehen). Entsprechend sollen solche Algorithmen auch für Sicherheitsanwendungen in Betracht gezogen werden, z.B. im Bereich der Schienenverkehrstechnik. Speziell in diesem Bereich sind die Sicherheitsanforderungen aus nachvollziehbarer Weise allerdings besonders hoch.

Derzeit kann es noch als herausfordernd angesehen werden Einen KI Algorithmus für Sicherheitsanwendungen zu verwenden, da bekannte Algorithmen eine entsprechende Sicherheitszertifizierung (im Wesentlichen) nicht erreichen.

Hierbei könnte es aber besonders vorteilhaft sein, die Datensätze (oder auch die Trainingsdatensätze) auf zuverlässige Weise zu evaluieren, so dass aussagekräftige Genauigkeits- bzw. Fehlklassifizierungsnachweise vorliegen würden.

Konventionell gibt es hierfür aber im Wesentlichen nur rein statistische Ansätze. Die entsprechend bestimmten Wahrscheinlichkeiten (und Schwellenwerte) für Fehler bei der Fehlklassifizierung sind derzeit zu ungenau, um von praktischem Nutzen zu sein, da sie nur mit der Rate $\sqrt{n}$ (die Rate n wäre wünschenswert) konvergieren (wenn n die Anzahl der Datenpunkte ist). Diese bisherigen Schätzungen nutzen jedoch nicht die Eigenschaften des jeweiligen Problems, wie z.B. Verteilungsformen, oder machen keine besonderen Annahmen bezüglich der Problemstellung. Eine Konsequenz hieraus wäre nun die Sicherheitsstandards für KI-Anwendungen anzupassen bzw. zu senken. Dies kann in Hinblick auf Sicherheitsrisiken jedoch nicht wünschenswert sein.

Zusammenfassung der Erfindung

Es könnte ein Bedarf bestehen, einen Datensatz auf effiziente und zuverlässige Weise zu evaluieren.

Ein Verfahren, eine Vorrichtung zur Datenverarbeitung, und ein Computerprogrammprodukt werden im Folgenden beschrieben.

Gemäß einem ersten Aspekt der Erfindung wird ein (insbesondere computer-implementiertes) Verfahren beschrieben zum Evaluieren (Bewerten, Überprüfen, insbesondere der Wahrscheinlichkeit einer Fehlklassifizierung) eines Datensatzes, das Verfahren aufweisend:

i) Bereitstellen des Datensatzes, welcher einen technischen/physikalischen Prozess betrifft bzw. mittels eines technischen/physikalischen Prozesses (z.B. Erfassen und/oder Simulieren von Signalen aus der Schienenverkehrstechnik) erzeugt wurde, und aufweist:

a) eine Vielzahl von ersten Datenpunkten, welche einem ersten Label (bzw. Markierung, Charakteristik, Parameter) (z.B. rotes Ampelsignal) zuordenbar sind, wobei die ersten Datenpunkte (zumindest teilweise) zumindest einen ersten lokalen Clusterbereich bilden, und

b) eine Vielzahl von zweiten Datenpunkten, welche einem zweiten Label (z.B. grünes Ampelsignal) zuordenbar sind, wobei die zweiten Datenpunkte zumindest teilweise zumindest einen zweiten lokalen Clusterbereich bilden,

wobei die ersten Datenpunkte und die zweiten Datenpunkte separierbar sind (bzw. nicht überlappen);

ii) Erstellen eines Unsicherheitsbereichs (z.B. eine Fläche im zweidimensionalen Problemraum, welche eine Länge L und eine Breite w aufweist bzw. im allgemeinen m-dimensionalen Fall eine Hyperfläche mit einem (m-1)dimensionalen Volumen und einem Abstand) zumindest zwischen dem ersten lokalen Clusterbereich der ersten Datenpunkte und dem zweiten lokalen Clusterbereich der zweiten Datenpunkte; und

iii) Evaluieren des Datensatzes basierend auf dem erstellten Unsicherheitsbereich.

Gemäß einem zweiten Aspekt der Erfindung wird ein Verfahren beschrieben, aufweisend:

i) Durchführen eines physikalischen Prozesses (z.B. Erfassen von Signalen), (hierbei)
ii) Erstellen eines Datensatzes (insbesondere mittels eines künstliche Intelligenz, KI, Algorithmus) basierend auf dem physikalischen Prozess, und
iii) Evaluieren des Datensatzes gemäß dem oben beschriebenen Verfahren.

Gemäß einem dritten Aspekt der Erfindung wird eine Vorrichtung zur Datenverarbeitung beschrieben, welche zumindest einen Prozessor aufweist, und welche eingerichtet das oben beschriebene Verfahren auszuführen.

Gemäß einem vierten Aspekt der Erfindung wird ein Computerprogrammprodukt beschrieben, welches Befehle aufweist, die bei der Ausführung des Programms durch einen Computer diesen veranlassen, das oben beschriebene Verfahren auszuführen.

Im Kontext dieses Dokuments kann sich der Begriff "Datensatz" insbesondere auf eine Mehrzahl von Daten (-Punkten) beziehen. Die Daten (z.B. Signale, Zeitreihen, usw.) können auch mehrdimensional sein. Insbesondere stehen diese Daten in Zusammenhang mit einer technischen Funktion bzw. einem physikalischen Prozess. In einem Beispiel werden die Daten im Rahmen des physikalischen Prozesses erfasst bzw. gemessen. Beispielsweise werden Signale erfasst oder ein Achszähler misst die Anzahl durchfahrender Achsen. In einem weiteren Beispiel wird der Datensatz simuliert/modelliert, betrifft dann aber immer noch eine technische Funktion, z.B. werden die Signale oder der Achsenverlauf simuliert. Bei dem Datensatz kann es sich um ein Messergebnis handeln, aber auch z.B. um Verifikationsdaten oder Trainingsdaten.

Gemäß einem exemplarischen Ausführungsbeispiel kann die Erfindung auf der Idee basieren, dass ein Datensatz auf effiziente und zuverlässige Weise evaluiert werden kann, wenn mehrere Annahmen (siehe unten) auf den Datensatz zutreffen (bzw. der Datensatz derart transformiert wird, dass die Annahmen zutreffen) und die Evaluation basierend auf einem Unsicherheitsbereich zwischen (lokalen) Clusterbereichen von Datenpunkten desselben Labels durchgeführt wird.

Die genannten Annahmen sollen im Folgenden verdeutlicht werden. Hierbei ist n die Größe des Datensatzes (bzw. die Anzahl von Datenpunkten) und m die Dimension der Daten bzw. die Anzahl der Dimensionen des Problemraums des Datensatzes. Für den Datensatz werden insbesondere folgende Annahmen getroffen (bzw. sollen (auch durch Datentransformation) erfüllt sein):

Annahme A1: Die n Datenpunkte sind im m-dimensionalen Raum durch (m-1) dimensionale Sätze von Hyperbereichen bzw. Hyperebenen (L) getrennt. Bei einem zweidimensionalen Raum wäre z.B. der Hyperbereich eine Länge, während der Hyperbereich in einem dreidimensionalen Raum z.B. eine Fläche wäre.

Annahme A2: Der Hyperbereich und/oder der Grenzbereich (w) (bzw. Oberflächenbereich/Oberflächenvolumen) des Hyperbereichs (L) kann definiert/gemessen werden und ist endlich (insbesondere keine ausgefallenen Ränder wie Mandelbrot (Fraktale) etc.).

Annahme A3: Die Datenpunkte, welche einem Label zuordenbar sind, haben eine Tendenz zum Clustern bzw. bilden einen lokalen Clusterbereich. Anders ausgedrückt, ein Datenpunkt eines anderen Labels tritt (im Wesentlichen) nur in unmittelbarer Nachbarschaft der trennenden Hyperbereiche auf (A3 ist somit eine Folge von A1).

Annahme A4: In der Nähe des Grenzbereichs des Hyperbereichs ist die Verteilung der Datenpunkte lokal homogen (durch die gleiche kontinuierliche Verteilung F). Die Grenze von $F^{-1}(x)$, wenn x sich Null nähert, existiert und ist endlich.

Im Gegensatz zu bekannten statistischen Verfahren wird im vorliegenden Fall die Verteilung der Datenpunkte in der Umgebung (Nähe, vicinity) des Grenzbereichs (des Hyperbereichs) betrachtet. Mit diesem Ansatz kann ein überraschend effizientes Evaluationsverfahren bereitgestellt werden, welches z.B. ein Maß für die Zuverlässigkeit einer Fehlklassifizierung bereitgestellt. In einem bevorzugten Ausführungsbeispiel gelingt dies derart, dass mit Rate n anstelle von Rate $\sqrt{n}$ (siehe statistische Verfahren oben) konvergiert. Dies ist äußerst überraschend, kann aber durch die Annahmen (A1-A4) begründet werden, die sich von klassischer statistischer Lerntheorie unterscheiden.

Ein besonderer Vorteil kann ferner sein, dass das Ergebnis sehr allgemein ist und dass es z.B. erlauben könnte, eine Anzahl von Trainingsdaten deutlich zu verringern.

Exemplarische Ausführungsbeispiele

Gemäß einem Ausführungsbeispiel weist das Evaluieren auf: Abschätzen der Wahrscheinlichkeit, dass ein Datenpunkt dem falschen Label zugeordnet wird. In anderen Worten, dass einer der ersten Datenpunkte dem zweiten Label zugeordnet wird und/oder einer der zweiten Datenpunkte dem ersten Label zugeordnet wird. In einem praktischen Beispiel könnte z.B. ein rotes Ampelsignal (als erstes Label) mit einem grünen Ampelsignal (als zweites Label) verwechselt bzw. fehlklassifiziert werden. Eine solche Fehlklassifizierung (z.B. durch ein KI System) hätte augenscheinlich erhebliche Konsequenzen. Daher kann es besonders wichtig sein, die Wahrscheinlichkeit einer Fehlklassifizierung möglichst genau zu bestimmen.

Es hat sich überraschend gezeigt, dass das beschriebene Evaluationsverfahren dies (zumindest teilweise) effizienter und zuverlässiger bewerkstelligen kann als etablierte statistische Verfahren. Anders ausgedrückt wird ein Maß für die Wahrscheinlichkeit einer Fehlklassifikation bestimmt. Insgesamt können durch das beschriebene Evaluationsverfahren Datensätze (insbesondere aus dem Schienenverkehrbereich, wo Sicherheitsanforderungen eine herausragende Rolle spielen), aber auch Trainingsdatensätze, effizient und sicher bewertet werden.

Gemäß einem weiteren Ausführungsbeispiel weist das Erstellen des Unsicherheitsbereichs ferner auf: Bestimmen (Definieren) eines endlichen Hyperbereichs (L) des Unsicherheitsbereichs. Ein solcher Hyperbereich existiert und ist klar bestimmbar (siehe Annahmen A1 und A2 oben) zwischen Clusterbereichen. Im vorliegenden Kontext wird der Begriff "Hyperbereich" verwendet, um unabhängig von der Anzahl der Dimensionen des jeweiligen Problemraums zu sein. Im Wesentlichen bezeichnet der Begriff Hyperbereich eine bekannte Hyperebene, jedoch soll keine Einschränkung der Dimensionalität erfolgen, Diese hängt vom jeweiligen problemraum des Datensatzes ab. Während der Hyperbereich in einem zweidimensionalen Problemraum also eine Länge wäre, so wäre er in einem dreidimensionalen Problemraum eine Fläche (also Hyperebene bzw. Hyperfläche), in einem vierdimensionalen Problemraum ein Volumen, etc.

In einem exemplarischen Beispiel können eine Vielzahl von etablierten Methoden eingesetzt werden, um den Hyperbereich zu bestimmen, z.B. Delaunay Triangulation, Grenz(wert)suche, Maximum Margin Hyperplane, etc. Diese Aufzählung von Beispielen soll nicht abschließend sein. Dadurch können etablierte und effiziente Methoden direkt implementiert werden.

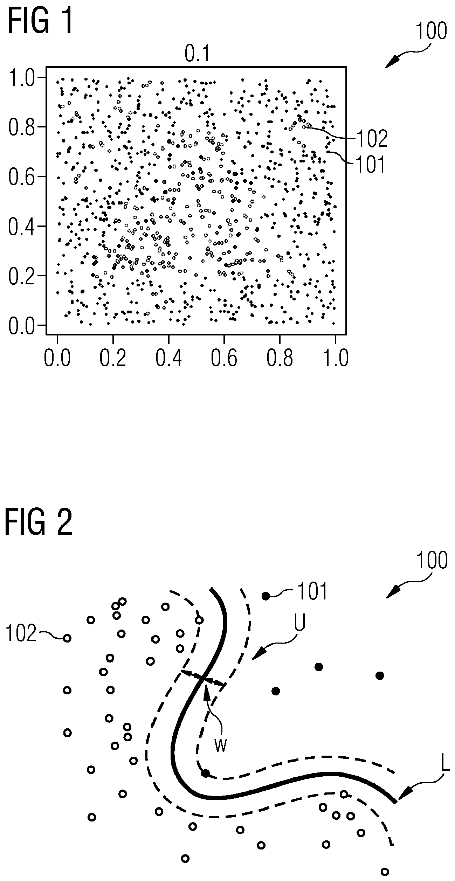

Gemäß einem weiteren Ausführungsbeispiel weist das Erstellen des Unsicherheitsbereichs ferner auf: Bestimmen bzw. Abschätzen eines Grenzbereichs (w) des Unsicherheitsbereichs (bzw. des Hyperbereichs). Insbesondere wird hierbei die Annahme getroffen, dass die Verteilung der Datenpunkte im Grenzbereich einer festen, aber unbekannten stochastischen Verteilung folgt. Als Sicherheitsmaß wird beispielsweise ein (oberes) Quantil der minimalen Abstandsverteilung abgeschätzt. Es hat sich überraschend gezeigt, dass eine solche Abschätzung (basierend auf einer stochastischen Verteilung) besonders effizient und zuverlässig funktionieren kann. Exemplarische und detaillierte Ausführungsbeispiele betreffend das Abschätzen des Grenzbereichs finden sich unten in Bezug zu den Figuren 2 bis 5.

Gemäß einem weiteren Ausführungsbeispiel stammt der Datensatz aus dem Bereich der Schienenverkehrstechnik. Insbesondere betrifft der Datensatz zumindest einen der folgenden technischen Funktionen bzw. physikalischen Prozesse: Signale, insbesondere Lichtsignale (weiter insbesondere Ampeln), Achszähler, Weichenantrieb. Dies kann den Vorteil haben, dass Datensätze betreffend wirtschaftlich relevante technische Funktionen, insbesondere aus dem Bahnbereich, mittels dem beschriebenen Verfahren evaluiert/charakterisiert werden können. Wie oben bereits erwähnt, ist in diesem Bereich der Faktor Sicherheit von ganz besonderer Relevanz.

Gemäß einem weiteren Ausführungsbeispiel weist der Datensatz zumindest 100.000 Datenpunkte, insbesondere zumindest 500.000 Datenpunkte, weiter insbesondere zumindest 1.000.000 Datenpunkte, weiter insbesondere zumindest 10.000.000 Datenpunkte, auf. Es hat sich überraschend gezeigt, dass die Zuverlässigkeit des Evaluierens (der Fehlklassifizierung) bei besonders hohem n (Anzahl von Datenpunkten) enorm ansteigt.

Dies kann im folgenden exemplarischen Beispiel verdeutlicht werden. Zunächst wird ein Datensatz betrachtet der n = 10.000 Datenpunkte aufweist. In der statistischen Lerntheorie wäre die Grenze der Evaluierung in der Größenordnung von 0,01, mit dem vorliegenden Verfahren aber in der Größenordnung von 0,0001 (beide Ergebnisse müsste mit einer unbekannten Konstante im Bereich von 10-100 multipliziert werden). Beides kann aber für Sicherheitsanwendungen (im Bahnbereich) unbrauchbar sein. Wird nun aber n auf 1.000.000 Datenpunkte erhöht, dann wäre das Ergebnis nach statistischer Lerntheorie in der Größenordnung von 0,001, also immer noch zu unzuverlässig für Sicherheitsanwendungen. Bei dem beschriebenen Verfahren würde die Grenze jedoch in der Größenordnung von 0,000001 liegen, wodurch in diesem Beispiel bereits eine Eignung für grundlegende Sicherheitsargumente vorhanden wäre.

Gemäß einem weiteren Ausführungsbeispiel wird der Problemraum des Datensatzes in zwei oder mehr, insbesondere drei oder mehr, Dimensionen (m) definiert. Dies kann den Vorteil haben, dass die Trennung der Datenpunkte verbessert werden kann. Insbesondere können in manchen Fällen dadurch die Annahmen besonders gut erfüllt werden, bzw. eine hohe Separierbarkeit der Datenpunkte erreicht werden. Auch das Vorhandensein von lokalen Clusterbereichen kann durch diese Maßnahme verbessert werden.

Gemäß einem weiteren Ausführungsbeispiel weist das Verfahren auf: Verringern der angewendeten Dimensionen. Dies kann den Vorteil haben, dass Ressourcen (insbesondere Rechenpower) gespart werden können. Ein Verringern der Dimensionen des Problemraums kann direkt mittels etablierter Methoden geschehen, z.B. Hauptkomponentenanalyse. In anderen Worten wird die Dimensionalität des Problems (der Dimensionen des Problemraums) reduziert, z.B. durch Merkmalsextraktion, um nur die wichtigsten Merkmale der Daten zu betrachten.

Gemäß einem weiteren Ausführungsbeispiel weist das Verfahren auf: Erhöhen der angewendeten Dimensionen. Wie oben bereits erläutert können dadurch Separierbarkeit bzw. Clusterbildung verbessert werden. Auch dies kann direkt mittels etablierter Methoden zum Transformierens der Daten(punkte) umgesetzt werden.

Auch in Unterdatensätzen kann es u.U. nicht einfach sein die Datenpunkte zu trennen. Es kann vorteilhaft sein, die Datenpunkte zu transformieren, insbesondere derart, dass die Anzahl der Dimensionen erhöht wird. Dadurch kann eine effizientere Trennung (Separierung) der Datenpunkte gelingen. Es sind Transformationen bekannt, welche auch eine lineare Separation ermöglichen, wobei allerdings zusätzliche Dimensionen eingeführt werden müssten. Dies ist z. B. aus der statistischen Lerntheorie bekannt und wird dort als "kernel trick" bezeichnet.

Gemäß einem weiteren Ausführungsbeispiel weist das Verfahren auf: Separieren zumindest eines Unterdatensatzes (bzw. eines Unterraums) von dem Datensatz (bzw. dem Problemraum). In einem Ausführungsbeispiel wird dies insbesondere derart durchgeführt, dass für den Unterdatensatz die Verteilung der Datenpunkte in der Umgebung des Unsicherheitsbereichs (im Wesentlichen) lokal homogen ist.

Gemäß einem weiteren Ausführungsbeispiel weist das Verfahren auf: Zusammenführen der Evaluierung von zumindest zwei Unterdatensätzen. Dadurch kann trotz Separation am Ende ein zuverlässiges Gesamtergebnis erhalten werden.

Gemäß einem exemplarischen Ausführungsbeispiel, wenn zumindest A1 und A2 für den Datensatz gelten (oder zumindest plausibel sind), können z.B. folgende Schritte durchgeführt werden:

1) Falls erforderlich kann der Problemraum des Datensatzes in Teilmengen (Unterdatensätze) separiert werden, für die A4 gilt. Für jeden separierten Unterdatensatz werden die Anzahl von Datenpunkten und die empirische Verteilung bestimmt.

2) Für jeden Unterdatensatz (Teilmenge) kann der Oberflächenbereich (das Oberflächenvolumen) L der Grenze der Hyperebene und die Unsicherheitsbreite w berechnet werden.

3) Die Informationen der Unterdatensätze können gesammelt und summiert werden, um das Gesamtergebnis für den gesamten Problemraum des Datensatzes zu erhalten.

Gemäß einem weiteren Ausführungsbeispiel weist das Evaluieren auf: Feststellen, ob der Datensatz ein vorbestimmtes Sicherheitskriterium, insbesondere im Bereich der Schienenverkehrstechnik, erfüllt. Dies kann den Vorteil haben, dass ein Datensatz (insbesondere die Wahrscheinlichkeit einer Fehlklassifizierung) effizient und zuverlässig evaluierbar ist. Hierfür kann es insbesondere im Bereich der Schienenverkehrstechnik notwendig sein, dass das Maß für die Datenzuverlässigkeit derart hoch angesetzt ist, dass es von konventionellen statistischen Methoden (siehe oben) nicht erfüllt werden kann. Jedoch kann dies überraschend mit dem hier beschriebenen Evaluationsverfahren ermöglicht sein.

In einem exemplarischen Ausführungsbeispiel soll eine Sicherheitsanforderung von z.B. $10^{-5}$ erfüllt werden. Dies würde bedeuten, dass auch Trainings- und Validierungsergebnisse keine höhere Ausfallrate aufweisen sollen. Angenommen ein empirisches Ergebnis $R_{emp}$ liegt in dieser Größenordnung. Dann kann insbesondere die Obergrenze $R_{emp} + \Delta$ von Interesse sein, so dass die tatsächliche Fehlerrate R unter diesem Schwellenwert liegt mit einer statistischen Konfidenz von zumindest p. Es muss also möglicherweise sichergestellt werden, dass $R_{emp} + \Delta < s$ ist, dann ist bekannt, dass mit einer Konfidenz von p die Sicherheitsanforderung erfüllt ist. Es können die Ergebnisse für die Länge der Konfidenzintervalle $\Delta$ für verschiedene Ansätze betrachtet werden, wenn davon ausgegangen wird, dass die Validierungsergebnisse adäquat sind.

Die folgende Tabelle vergleicht in diesem Zusammenhang das beschriebene Evaluierungsverfahren mit den etablierten statistischen Ansätzen Chernoff, Normalkonfidenz, und Vapnik. Bei dem hier beschriebenen Evaluierungsverfahren werden Gesamtergebnisse angegeben, denn, anders als bei den anderen Ansätzen, kann $\Delta$ nicht separiert werden.

| n | Chernoff | Normalkonfidenz | Vapnik | Evaluierungsverfahren |
|---|---|---|---|---|
| 100.000 | 0.0019 | 0.000025 | 0.029 | 0.00028 |
| 1.000.000 | 0.00059 | 0.000008 | 0.0092 | 0.000028 |
| 10.000.000 | 0.00019 | 0.0000025 | 0.0029 | 0.0000028 |
| 100.000.000 | 0.000059 | 0.0000008 | 0.00092 | 0.00000028 |
| 1.000.000.000 | 0.000019 | 0.00000025 | 0.00029 | 0.000000028 |

Gemäß einem weiteren Ausführungsbeispiel weist das Verfahren das Verwenden eines künstliche Intelligenz, KI, Algorithmus auf. Im Kontext dieses Dokuments kann der Begriff "KI" sich insbesondere auf Computer-basierte Ansätze zur Nachahmung kognitiver Funktionen eines menschlichen Geistes beziehen, insbesondere Lernen und Problemlösung. Es wurde eine Vielzahl verschiedener mathematischer Algorithmen und Berechnungsmodelle entwickelt, um KI-Funktionalitäten zu implementieren, beispielsweise "maschinelles Lernen", "deep learning", neuronale Netzwerke, genetische Algorithmen, Kernel Regression, etc. Der Hauptzweck dieser Ansätze kann darin gesehen werden, einen vorhandenen Algorithmus zu verbessern, indem er mit Trainingsdaten trainiert wird, so dass ein Lerneffekt auftritt und sich die Problemlösungsfähigkeit des Algorithmus im Laufe der Zeit verbessert. Dies kann mit oder ohne menschliches Eingreifen (z.B. Verbessern) geschehen.

Gemäß einem weiteren Ausführungsbeispiel wird der (evaluierte, insbesondere als zuverlässig angesehene) Datensatz als Trainingsdaten für einen KI Algorithmus verwendet. Trainingsdaten können von besonderer Wichtigkeit sein, um eine akzeptable Zuverlässigkeit des zu trainierenden Algorithmus, insbesondere eines KI Algorithmus, zu ermöglichen. Gemäß einem weiteren Ausführungsbeispiel werden die Trainingsdaten an einen künstliche Intelligenz (KI) Algorithmus bereitgestellt.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

Kurze Beschreibung der Zeichnungen

Figur 1 zeigt einen Datensatz mit ersten und zweiten Datenpunkten, welche jeweils einem Label zuordenbar sind, gemäß einem exemplarischen Ausführungsbeispiel der Erfindung.

Figur 2 zeigt einen Unsicherheitsbereich zwischen einem ersten Clusterbereich und einem zweiten Clusterbereich gemäß einem exemplarischen Ausführungsbeispiel der Erfindung.

Figur 3 zeigt schematisch einen Unsicherheitsbereich zwischen einem ersten Clusterbereich und einem zweiten Clusterbereich in einem eindimensionalen Problemraum gemäß einem exemplarischen Ausführungsbeispiel der Erfindung.

Figur 4 zeigt schematisch einen Unsicherheitsbereich zwischen einem ersten Clusterbereich und einem zweiten Clusterbereich in einem zweidimensionalen Problemraum gemäß einem exemplarischen Ausführungsbeispiel der Erfindung.

Figur 5 zeigt schematisch eine Mehrzahl von Unsicherheitsbereichen, welche jeweils einen ersten Clusterbereich abgrenzen, gemäß einem exemplarischen Ausführungsbeispiel der Erfindung.

Figur 6 zeigt einen Datensatz mit komplexer Separation zwischen den Clusterbereichen gemäß einem exemplarischen Ausführungsbeispiel der Erfindung.

Figur 7 zeigt eine Partitionierung des Datensatzes von Figur 6 gemäß einem exemplarischen Ausführungsbeispiel der Erfindung.

Figur 8 zeigt schematisch ein Verringern der Dimensionalität und ein Separieren eines Unterdatensatzes gemäß einem exemplarischen Ausführungsbeispiel der Erfindung.

Detaillierte Beschreibung der Zeichnungen

Die Darstellung in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

**Figur 1** zeigt schematisch einen Datensatz 100 gemäß einem exemplarischen Ausführungsbeispiel der Erfindung. Der Datensatz 100 wurde mittels eines physikalischen Prozesses erzeugt, der im Zusammenhang mit Signalen in der Schienenverkehrstechnik steht. Ein erstes Label betrifft ein rotes Signal, während ein zweites Label ein grünes Signal betrifft. Der Datensatz 100 weist eine Vielzahl von ersten Datenpunkten 101 auf, die dem ersten Label zugeordnet sind (hier schwarze Punkte), und eine Vielzahl von zweiten Datenpunkten 102, die dem zweiten Label (hier weiße Punkte) zugeordnet sind.

Anders ausgedrückt weist der Datensatz 100 eine Anzahl n von Datenpunkten mit einfachen Labels (z.B. rot und grün bei einem Problem bei der Ampelerkennung) auf. In diesem Beispiel weist der Problemraum des Datensatzes 100 zwei Dimensionen auf. Es wird angenommen (bzw. ist plausibel), dass die ersten Datenpunkte 101 und die zweiten Datenpunkte 102 separierbar sind (Annahme A1).

Der Datensatz 100 soll nun derart evaluiert werden, dass eine Fehlergrenze für die Wahrscheinlichkeit einer Fehlklassifizierung gefunden wird. Eine solche Fehlklassifizierung würde z.B. vorliegen, wenn ein roter Punkt als grüner Punkt klassifiziert wird.

Weiterhin wird angenommen (bzw. ist plausibel), dass eine Grenzlinie zwischen den beiden Mengen (ersten und zweiten Datenpunkten) ausreichend glatt ist, messbar ist, und eine endliche Länge L hat. Damit sind stark unregelmäßigen Formen wie Mandelbrotmengen (Fraktale) usw. ausgeschlossen (Annahme A2) .

Schließlich wird angenommen (bzw. ist plausibel), dass die Datenpunkte 101, 102 mit gleichem Label clustern. In anderen Worten ist die Wahrscheinlichkeit hoch, dass sich in der Umgebung eines Datenpunktes mit einem bestimmten Label ein Datenpunkt mit demselben Lebel befindet. In einem exemplarischen Beispiel ist innerhalb eines Datenpunkte-Dreiecks mit dem gleichen Label kein Datenpunkt mit anderem Label. Es wird somit davon ausgegangen, dass Datenpunkte des gleichen Labels normalerweise Nachbarn desselben Labels haben (Annahme A3). Dies wird bereits durch (A1) in der Theorie impliziert, ist aber nicht immer bei der Datenaufnahme angegeben. A3 impliziert, dass ein ausreichend großer und repräsentativer Datensatz vorliegt.

**Figur 2** zeigt schematisch einen Unsicherheitsbereich U in dem Datensatz 100 gemäß einem exemplarischen Ausführungsbeispiel der Erfindung. Unter der Annahme, dass die ersten und zweiten Datenpunkte separiert sind, gibt es nicht die eine optimale Lösung für das Klassifizierungsproblem. Jedoch findet sich lokal ein Bereich zwischen Clusterbereichen von ersten und zweiten Datenpunkten, in welchem die Klassifizierung unsicher ist.

In dem Beispiel von Figur 2 ist eine theoretische Grenze L eingezeichnet, von der bekannt ist, dass sie existiert (A1) und definierbar ist (A2). Ziel ist es nun, diesen Unsicherheitsbereich U zu quantifizieren, z.B. im zweidimensionalen Problemraum die Fläche von zu bestimmen. Ein entsprechender Hyperbereich ist dann eindimensional (eine Länge). Eine Herangehensweise wäre es, die Fläche zu berechnen, also die Länge des Hyperbereichs L mal der Breite w. Gemäß A3 wird davon ausgegangen, dass es ziemlich unwahrscheinlich ist, dass Datenpunkte verschiedener Labels im selben Clusterbereich liegen. Allerdings ist die Verteilung der Datenpunkte unsicher.

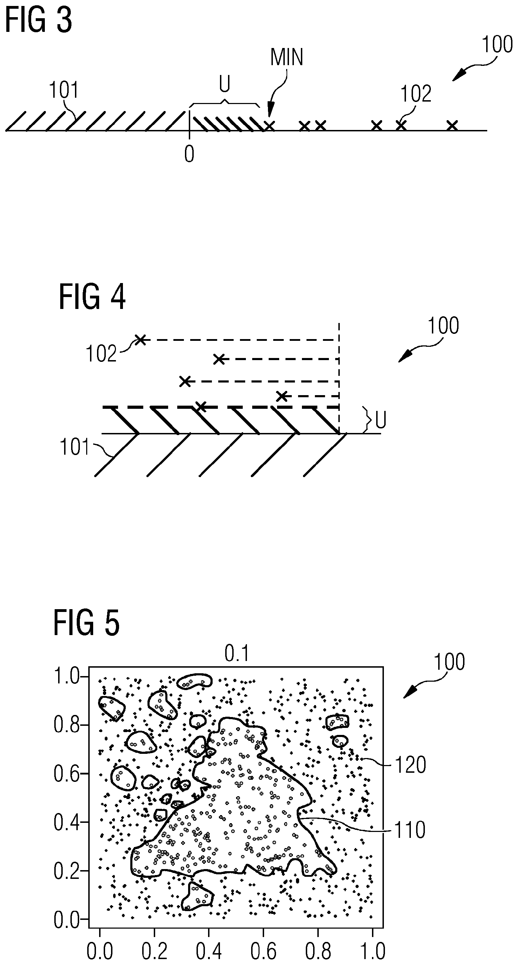

**Figur 3** zeigt schematisch einen Unsicherheitsbereich U in einem eindimensionalen Problemraum des Datensatzes 100 gemäß einem exemplarischen Ausführungsbeispiel der Erfindung. Zwischen einem ersten Clusterbereich erster Datenpunkte 101 (linke Seite) und einem zweiten Clusterbereich zweiter Datenpunkte 102 (rechte Seite) befindet sich eine Grenze 0. Von Interesse ist in diesem eindimensionalen Beispiel der Unsicherheitsbereich U zwischen der Grenze 0 und dem zweiten Clusterbereich.

Es wird angenommen, dass die zweiten Datenpunkte 102 eine positive iid (independent and identically distributed) Verteilung aufweisen. Somit sind die Datenpunkte als zufällige Variablen unabhängig und identisch verteilt (jede Zufallsvariable hat dieselbe Wahrscheinlichkeitsverteilung). Weiterhin wird angenommen, dass das Minimum der Zufallsvariablen ein zutreffendes Maß für w/2 ist.

Exponentielle Verteilung: Für exponentielle iid Zufallsvariablen mit Parameter $\lambda$ ist das Minimum exponentiell verteilt mit Parameter $n\lambda$, so dass der Mittelwert bei $1/(n\lambda)$ liegt. Ein einseitiges Perzentil für ein Signifikantslevel von p kann somit bestimmt werden als (1):

$$\frac{-\ln(1-p)}{n\lambda}$$

Somit nähert sich (1) schnell mit der Rate n (anstelle von $\sqrt{n}$ ) an Null an. Die anderen Parameter sind konstant.

Uniforme Verteilung: zum Vergleich kann angenommen werden, dass die Verteilung der Datenpunkte für ein bestimmtes Intervall gleichmäßig ist. Dann kann gefolgert werden, dass das Minimum (1,n) verteilt ist und der Mittelwert 1/(n+1) beträgt. Daraus kann folgendes Perzentil folgen (2):

$$1 - \sqrt[n]{(1-p)}$$

(2) unterscheidet sich zwar deutlich von (1), aber nach einer Taylor-Expansion kann für kleine Werte von (1-p) ein ähnliches Resultat erhalten werden wie bei (1).

Allgemeine Verteilungen: generell ist die Verteilung des Minimums nicht bekannt, aber aus der Extremwerttheorie ist bekannt, dass die Grenzverteilung für begrenzte Minimumprobleme eine Weibull Verteilung ist. Diese Verteilung hängt von zwei Parametern ab, wobei $\lambda$ eine Skalierung und k ein Formparameter ist, z.B. k = 1 gibt eine exponentielle Verteilung:

$$F(t) = 1 - e^{-(\lambda t)^k}$$

Die Perzentilen einer Weibull-Verteilungsind gegeben durch:

$$\frac{\sqrt[k]{-\ln(1-p)}}{\lambda}$$

Dies erscheint ähnlich zu (1), jedoch können weitere Annahmen bezüglich der Form der Verteilung notwendig sein.

Da aber selbst die Momente für das Minimum der N(0,1)-Verteilung keine geschlossene Formlösung haben, kann es schwierig sein, zumindest ein ungefähres Ergebnis für das erwartete Minimum oder die Varianz von dem Minimum einer allgemeinen Verteilung zu erhalten.

Die sogenannte Wahrscheinlichkeits-Integraltransformation kann jedoch hilfreich sein. Es ist bekannt, dass jede stetige Wahrscheinlichkeitsverteilung F aus der Gleichverteilung durch $X=F^{-1}(U)$ erzeugt werden kann. Dies wird z.B. für die Erzeugung allgemeiner Zufallszahlen in der Monte-Carlo-Simulation verwendet. Es ist bekannt, dass diese Beziehung für die Ordnungsstatistik und insbesondere für das Minimum $X_{(1)} = F^{-1}(U_{(1)})$ gilt. Wenn also Mengen für eine allgemeine Verteilung berechnen sollen, kann diese anwendet werden. Für die gleichmäßige Verteilung sind das genaue Quantil aus (2) und eine zweckdienliche Näherung von (1) bekannt.

Das einheitliche Perzentil wird mit $q_p$ bezeichnet. Dann ist das verwandte Perzentil für den allgemeinen Fall gegeben mit $F^{-1}(q_p)$. Aber da $q_p$ gegen Null tendiert, wenn n zunimmt, ist das Verhalten von $F^{-1}$ nahe Null besonders interessant. Für eine kontinuierliche positive Verteilung kann eine Serienexpansion angenommen werden: $F^{-1}(x) \approx ax$. Wenn die Verteilung F die Nähe von Null abdeckt, sollte es keinen konstanten Term geben. Dann ist a nur durch die Ableitung $(F^{-1})'(0)$ gegeben, was gleich ist zu $1/F'(0) = 1/f(0)$, wenn F die Wahrscheinlichkeitsdichte f hat. Schließlich kann ableitet werden (3):

$$F^{-1}(q_p) = \frac{q_p}{f(0)}$$

Aber (3) bedeutet, dass auch für allgemeine Verteilungen das Perzentil ähnlich ist wie (1), oder dass (1) bereits die allgemeine Form hat, wenn $\lambda$ durch f(0) ersetzt wird. Ein Vergleich zeigt, dass (3) aussagekräftig ist, da f(0)=0 für eine exponentielle Verteilung bedeuten würde, dass der erwartete Wert unendlich wäre. Für die gleichmäßige Verteilung selbst ist f(0)=1 und so ist (3) gleich (2).

Im Allgemeinen bedeutet f(0)=0 nur, dass die Wahrscheinlichkeitsmasse nahe Null klein ist und, dass die Reihenexpansion nicht gerechtfertigt ist, so dass die Näherung nicht verwendet werden kann, sondern die Inverse von F direkt bestimmt werden muss. Aber wenn mehr über das Verhalten von F oder f in der Nähe von Null bekannt ist, dann kann vielleicht ein aussagekräftigeres Ergebnis für Verteilungen mit f(0)=0 abgeleitet werden, entweder durch eine Reihenexpansion von F oder durch eine detailliertere Untersuchung von Grenzeigenschaften, z.B. durch die de l'Hospital Regel.

Aber für alle Verteilungen mit f(0)^0 wurde durch (3) und (1) gezeigt, dass die Rate der Konvergenz im Bereich 1/n anstelle von $1/\sqrt{n}$ (bei statistischen Ansätzen) ist. Dies bedeutet insbesondere, dass unter den oben genannten Annahmen eine deutliche Verbesserung eingetreten ist. Beispielsweise werden nun viel weniger Trainingsdaten benötigt.

Figur 4 zeigt schematisch einen Unsicherheitsbereich U in einem zweidimensionalen Problemraum des Datensatzes 100 gemäß einem exemplarischen Ausführungsbeispiel der Erfindung. Im Vergleich zu dem Beispiel von Figur 3 wurde also eine weitere Dimension hinzugefügt, wobei erneut nur ein Unsicherheitsbereich neben der Grenze 0 untersucht wird. Angenommen, dass das lineare Segment eine Länge L hat und w ein angenähertes Perzentil der Grenzverteilung bezeichnet, kann Lw als eine lokale Abschätzung des Unsicherheitsbereichs verwendet werden.

Um diese lokale Schätzung auf das vollständige Problem auszudehnen, wie in Figur 1 dargestellt, können mehr Annahmen notwendig sein. Erstens kann angenommen werden, dass lokal alle Grenzverteilungen ähnlich sind, nicht notwendigerweise gleich (A4). Dann kann, wie im Beispiel von Figur 2, angenommen werden, dass die Fläche des Unsicherheitsbereichs ungefähr Lw ist, wobei L die Länge der Grenzkurve ist. Es kann fraglich sein, ob der Unsicherheitsbereich nicht unterschätzen wird, wenn alle n Datenpunkte berücksichtigt werden und das Minimum aller Datenpunkte verwendet wird.

**Figur 5** zeigt schematisch eine Mehrzahl von Unsicherheitsbereichen, welche jeweils einen ersten Clusterbereich 110 mit ersten Datenpunkten von einem Bereich 120 zweiter Datenpunkte abgrenzen (bezüglich des Datensatzes 100 von Figur 1). Es kann angenommen werden, dass die Datenpunkte gleich und unabhängig verteilt sind und A4 erfüllt ist. A1 bis A3 scheinen zudem plausibel zu sein, so dass die Grenzkurve abgeschätzt werden kann.

Wie in den Figuren 3 und 4 kann auch hier nur eine Seite der Grenzkurve von Interesse sein. Eine Möglichkeit den Hyperbereich (hier Länge L) abzuschätzen kann z.B. mittels Delaunay Triangulation (insbesondere automatisch) erfolgen. Hierbei werden die Datenpunkte zu Dreiecken verbunden, wobei zwei Resultate möglich sind: alle drei Ecken eines Dreiecks sind demselben Label zugeordnet, oder eine Ecke ist einem anderen Label zugeordnet als die beiden anderen. Dreiecke mit demselben Label werden korrekt klassifiziert, wohingegen die anderen nahe der Grenze liegen. Basierend auf letzteren kann L abgeschätzt werden (e.g. Summieren der längsten Seiten dieser Dreiecke).

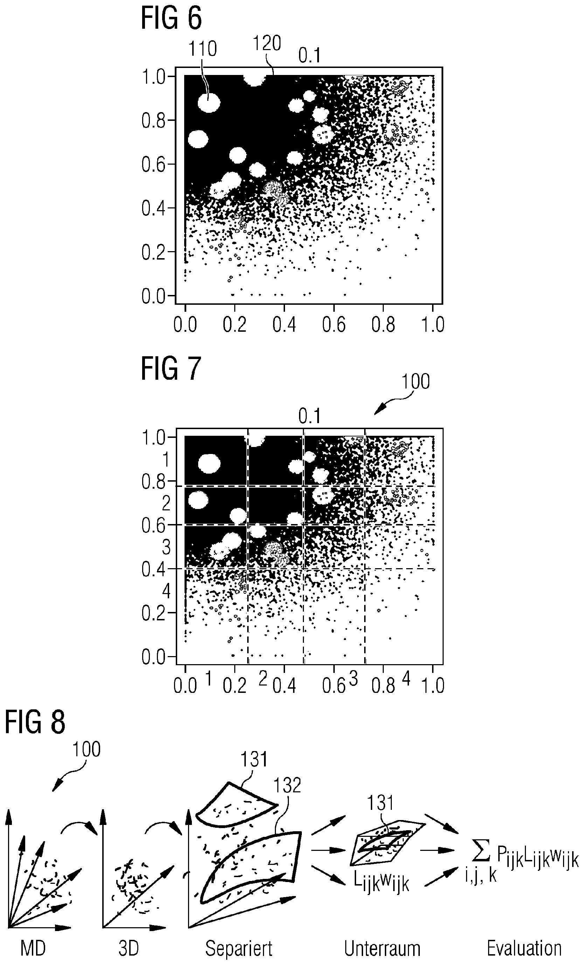

**Figur 6** zeigt einen Datensatz 100 mit komplexen Clusterbereichen 110, 120, deren Separation herausfordernd sein könnte, gemäß einem exemplarischen Ausführungsbeispiel der Erfindung. Der Datensatz von Figur 6 zeigt im Vergleich zu jenem von Figur 1 eine höhere Komplexität, und es liegt keine homogene Gesamtverteilung vor.

Es kann zwar angenommen werden, dass die Verteilung normal ist, aber in Wirklichkeit kann es deutlich komplexer sein, denn es liegt eigentlich eine Mischung aus Normalverteilungen vor, die an der Grenze abgeschnitten sind. Annahme A4 würde also nicht mehr zutreffen.

Um diese höhere Komplexität anzugehen, kann eine Partitionierung des Problemraums durchgeführt werden. **Figur 7** zeigt eine Detailansicht von Figur 6, wobei eine regelmäßige Aufteilung in 16 Teilprobleme eingezeichnet ist. Dies ist beispielhaft, andere Partitionierung, z.B. Dreiecke, könnten stattdessen verwendet werden.

Es ist bekannt wie viele Datenpunkte $n_{i,j}$ in jeder Partition sind, so dass die Wahrscheinlichkeit abgeschätzt werden kann, dass ein neuer Datenpunkt in eine Partition fällt: $p_{i,j} = n_{i,j}/n$. Entsprechend kann die Gesamtwahrscheinlichkeit (Gesamtergebnis) m einer Fehlklassifizierung zunächst für jede Partition bestimmt werden, z.B.:

$$m = \sum_{i,j} p_{i,j}\, m_{i,j}$$

Es kann angenommen werden, dass die Daten repräsentativ für die wahre Verteilung sind und Partitionierungen können aussortiert werden, welche nur ein Label aufweisen, z.B. 3,4 oder 3,3 in Figur 7. Für einige Partitionierungen kann ein einfacher Ansatz gewählt werden, z.B. 1,2 oder 4,2, wobei z.B. 2,4 oder 4,4 herausfordernder sein können. Nun können entweder mehr Daten erfasst werden oder es kann angenommen werden, dass $m_{i,j}$ in dieser Partitionierung 1 ist. Wenn die Anzahl von Datenpunkten in dieser Partitionierung gering ist, kann dies eine Möglichkeit sein. Beispielsweise können n=10.000 erste Datenpunkte (Label rot) in dem Datensatz 100 von Figur 6 vorhanden sein, wobei aber nur einer in Partitionierung 4,4 lokalisiert ist.

Unter der Annahme einer gleichen Grenzverteilung (insbesondere fast dasselbe f(0) in allen Unterdatensätzen), kann das Gesamtergebnis vereinfacht werden zu (bei gleichmäßigen oder gleichen Verteilungen):

$$m = \sum_{i,j} p_{i,j}\, m_{i,j} \sim \frac{-\ln(1-p)}{f(0)n} \sum_{i,j} L_{i,j} = L\, \frac{-\ln(1-p)}{f(0)n}$$

**Figur 8** zeigt schematisch ein Verringern der Dimensionalität und ein Separieren eines Unterdatensatzes gemäß einem exemplarischen Ausführungsbeispiel der Erfindung. In den bisherigen Figuren wurde ein- und zweidimensionale Problemräume behandelt. Jedoch steigt die Anzahl von Partionierungen exponentiell mit der Anzahl von Dimensionen. Daher kann es vorteilhaft sein, nur die wichtigsten Merkmale zu betrachten und diese, z.B. mittels Hauptkomponentenanalyse, zu extrahieren. Hierdurch kann die Dimensionalität verringert werden.

In dem Beispiel von Figur 8 liegen zunächst eine Mehrzahl von Dimensionen (multiple Dimensionen, MD) vor.

Diese werden zu drei Dimensionen verringert. Dann werden Unterdatensätze 131, 132 (bzw. Unterräume) separiert (bzw. Partitionierungen vorgenommen). Danach wird jeder Unterraum (hier 131) separat betrachtet und m (siehe oben) wird bestimmt. Zuletzt wird das Gesamtergebnis evaluiert, indem die Ergebnisse der Unterräume zusammengefasst werden.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffes sind Personen mit männlicher, weiblicher oder anderer Geschlechtsidentität mit umfasst.


**Patentansprüche**

1.   Ein Computer-implementiertes Verfahren zum Evaluieren eines Datensatzes (100), das Verfahren aufweisend:

  Bereitstellen des Datensatzes (100), welcher einen physikalischen Prozess betrifft, und aufweist:

    eine Vielzahl von ersten Datenpunkten (101), welche einem ersten Label zuordenbar sind, wobei die ersten Datenpunkte (101) zumindest teilweise zumindest einen ersten lokalen Clusterbereich (110) bilden, und eine Vielzahl von zweiten Datenpunkten (102), welche einem zweiten Label zuordenbar sind, wobei die zweiten Datenpunkte (102) zumindest teilweise zumindest einen zweiten lokalen Clusterbereich (120) bilden,
    wobei die ersten Datenpunkte (101) und die zweiten Datenpunkte (102) separierbar sind;

  Erstellen eines Unsicherheitsbereichs zumindest zwischen dem ersten lokalen Clusterbereich (110) der ersten Datenpunkte (101) und dem zweiten lokalen Clusterbereich (120) der zweiten Datenpunkte (102); und Evaluieren des Datensatzes (100) basierend auf dem erstellten Unsicherheitsbereich.

2.   Das Verfahren gemäß Anspruch 1, wobei das Evaluieren aufweist:
  Abschätzen der Wahrscheinlichkeit, dass ein Datenpunkt (101, 102) dem falschen Label zugeordnet wird, insbesondere, dass einer der ersten Datenpunkte (101) dem zweiten Label zugeordnet wird und/oder einer der zweiten Datenpunkte (102) dem ersten Label zugeordnet wird.

3.   Das Verfahren gemäß Anspruch 1 oder 2, wobei das Erstellen des Unsicherheitsbereichs ferner aufweist:
  Bestimmen eines endlichen Hyperbereichs (L) des Unsicherheitsbereichs,
  insbesondere wobei das Bestimmen des Hyperbereichs (L) zumindest eines der folgenden aufweist: Delaunay Triangulation, Grenzsuche, Maximum Margin Hyperplane.

4.   Das Verfahren gemäß einem beliebigen der vorhergehenden Ansprüche, wobei das Erstellen des Unsicherheitsbereichs ferner aufweist:
  Bestimmen eines Grenzbereichs (w) des Unsicherheitsbereichs basierend auf einer stochastischen Verteilung, insbesondere mittels Abschätzens eines Quantils der minimalen Abstandsverteilung.

5.   Das Verfahren gemäß einem beliebigen der vorhergehenden Ansprüche,

  wobei der Datensatz (100) aus dem Bereich der Schienenverkehrstechnik stammt,
  insbesondere zumindest eines der folgenden betrifft: Signale, insbesondere Lichtsignale, Achszähler, Weichenantrieb.

6.   Das Verfahren gemäß einem beliebigen der vorhergehenden Ansprüche,
  wobei der Datensatz (100) zumindest 100.000 Datenpunkte, insbesondere zumindest 500.000 Datenpunkte, weiter insbesondere zumindest 1.000.000 Datenpunkte, aufweist.

7.   Das Verfahren gemäß einem beliebigen der vorhergehenden Ansprüche,
  wobei der Problemraum des Datensatzes (100) in zwei oder mehr, insbesondere drei oder mehr, Dimensionen (n) definiert wird.

8. Das Verfahren gemäß einem beliebigen der vorhergehenden Ansprüche, ferner aufweisend:
Verringern der angewendeten Dimensionen,
insbesondere mittels Hauptkomponentenanalyse.

9. Das Verfahren gemäß einem beliebigen der vorhergehenden Ansprüche, ferner aufweisend:
Erhöhen der angewendeten Dimensionen,
insbesondere mittels Transformierens der Daten.

10. Das Verfahren gemäß einem beliebigen der vorhergehenden Ansprüche, ferner aufweisend:
Separieren zumindest eines Unterdatensatzes (131, 132) von dem Datensatz (100),
insbesondere derart, dass für den Unterdatensatz (131) die Verteilung der Datenpunkte in der Umgebung des Unsicherheitsbereichs im Wesentlichen lokal homogen ist.

11. Das Verfahren gemäß dem vorhergehenden Anspruch, ferner aufweisend:
Zusammenführen der Evaluierung von zumindest zwei Unterdatensätzen (131, 132).

12. Das Verfahren gemäß einem beliebigen der vorhergehenden Ansprüche, wobei das Evaluieren aufweist:
Feststellen, ob der Datensatz (100) ein vorbestimmtes Sicherheitskriterium, insbesondere im Bereich der Schienenverkehrstechnik, erfüllt.

13. Ein Verfahren, aufweisend:

Durchführen eines physikalischen Prozesses;
Erstellen eines Datensatzes (100), insbesondere mittels eines künstliche Intelligenz, KI, Algorithmus, basierend auf dem physikalischen Prozess; und
Evaluieren des Datensatzes (100) gemäß einem beliebigen der vorhergehenden Ansprüche.

14. Eine Vorrichtung zur Datenverarbeitung, welche zumindest einen Prozessor aufweist, und welche eingerichtet ist das Verfahren gemäß einem beliebigen der Ansprüche 1 bis 12 auszuführen.

15. Ein Computerprogrammprodukt, welches Befehle aufweist, die bei der Ausführung des Programms durch einen Computer diesen veranlassen, das Verfahren gemäß einem beliebigen der Ansprüche 1 bis 12 auszuführen.

FIG 1

FIG 2

# FIG 3

# FIG 4

# FIG 5

## FIG 6

## FIG 7

## FIG 8

MD     3D     Separiert     Unterraum     Evaluation

Europäisches
Patentamt

European
Patent Office

Office européen
des brevets

# EUROPÄISCHER RECHERCHENBERICHT

Nummer der Anmeldung

**EP 23 16 3429**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JENS BRABAND ET AL: "On Safety Assessment of Artificial Intelligence", ARXIV.ORG, CORNELL UNIVERSITY LIBRARY, 201 OLIN LIBRARY CORNELL UNIVERSITY ITHACA, NY 14853, 29. Februar 2020 (2020-02-29), XP081611032, * Abbildungen 1,2 * * Abbildung 5 * * Abschnitt "Machine learning as a classification problem"; Seite sechsten * ----- | 1-15 | INV. G06N20/00 G06N3/088 |
| X | CN 114 091 579 A (UNIV SHENZHEN TECHNOLOGY) 25. Februar 2022 (2022-02-25) * Ansprüche 1,2 * ----- | 1-15 | |

| RECHERCHIERTE SACHGEBIETE (IPC) |
|---|
| G06N |

Der vorliegende Recherchenbericht wurde für alle Patentansprüche erstellt

| Recherchenort | Abschlußdatum der Recherche | Prüfer |
|---|---|---|
| Den Haag | 15. August 2023 | Fonseca dos Santos |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..........................................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 16 3429

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2023

| Im Recherchenbericht angeführtes Patentdokument | Datum der Veröffentlichung | Mitglied(er) der Patentfamilie | Datum der Veröffentlichung |
|---|---|---|---|
| CN 114091579 A | 25-02-2022 | KEINE | |

Für nähere Einzelheiten zu diesem Anhang : siehe Amtsblatt des Europäischen Patentamts, Nr.12/82

EPO FORM P0461